# EUROPEAN PATENT SPECIFICATION

(11) **EP 2 050 179 B1**
(45) Date of publication and mention of the grant of the patent: **13.04.2011**
(21) Application number: 07789516.7
(22) Date of filing: 23.07.2007
(51) Int. Cl.: H02K 5/128, H02K 15/03, H02K 1/27

(54) **A MOTOR ROTOR AND A METHOD OF MANUFACTURING THE SAME**
MOTOR-ROTOR UND HERSTELLUNGSVERFAHREN DAFÜR
ROTOR DE MOTEUR ET PROCÉDÉ DE FABRICATION

(30) Priority: 24.07.2006 JP 2006200772
(43) Date of publication of application: 22.04.2009
(73) Proprietor: Toyota Jidosha Kabushiki Kaisha, Aichi-ken, 471-8571 (JP)
(72) Inventor: MAEDA, Tomoyuki, Toyota-shi Aichi-ken 471-8571 (JP)
(74) Representative: Kuhnen & Wacker
(86) International application number: PCT/IB2007/002073
(87) International publication number: WO 2008/012637

(56) References cited:
- JP-A- 2 017 838
- JP-A- 3 011 948
- JP-A- 9 149 572
- JP-A- 60 084 956
- JP-A- 2000 023 399

## Description

### BACKGROUND OF THE INVENTION

### 1. Field of the Invention

The invention relates to a motor rotor, more specifically, to a rotor for a high-speed motor and a method of manufacturing the same.

### 2. Description of the Related Arts

Japanese Patent Application Publication No. 2001-339886 (JP-A-2001-339886) describes a construction of a rotor for a high-speed motor. The rotor for a high-speed motor includes a cylindrical permanent magnet and a protection tube disposed to surround an outer peripheral surface of the permanent magnet. As an example, a rare-earth magnet having high magnetic flux density is employed as the permanent magnet so as to convert between electric energy and rotational motion at high efficiency in the motor, allowing the motor to be smaller in size and to produce higher output.

The rare-earth magnet has relatively low mechanical strength, and is subject to damage. Therefore, when the rare-earth magnet is used in the high-speed motor whose rotor rotates at high speed, there is a possibility that the rare-earth magnet may be damaged by strong centrifugal force generated during rotation. In order to prevent damaging the permanent magnet due to the centrifugal force, a protection tube is provided to surround the cylindrical permanent magnet such that the protection tube is firmly attached to the outer peripheral surface of the permanent magnet.

When installing the protection tube to the cylindrical permanent magnet for the purpose of protection of the magnet, an outer diameter of the permanent magnet is formed slightly larger than an inner diameter of the protection tube, and then the permanent magnet is inserted into the protection tube. In this way, compressive force is previously applied to the magnet (the magnet is prestressed), and therefore the magnet is less subject to tensile stress applied by strong centrifugal force generated by rotation of the motor at high speed, thereby preventing damaging the permanent magnet due to the centrifugal force.

However, as mentioned above, when assembling the permanent magnet and the protection tube, large force is applied to the permanent magnet. Therefore, the permanent magnet may be damaged in the process of assembling the protection tube and the permanent magnet.
Document JP 09 149 572 discloses a sleeve assembly to fix rotor magnets consisting of an inner tube and a prestressed outer tube.

### SUMMARY OF THE INVENTION

The invention provides a rotor in which a magnet is not stressed by large local pressure when assembling the magnet and a protection tube, and the magnet is prevented from being damaged due to strong centrifugal force generated during rotation of the motor at high speed.
The present invention provides a motor rotor according to claim 1 and a method for manufacturing a motor rotor according to claim 8. Further aspects are defined by the dependent claims.

According to the motor rotor of the invention, a shape memory material is used to form the inner tube, and when the shape of the inner tube is recovered, compressive force is applied to the magnet in advance. In this way, when assembling the protection tube and the magnet, thickness of the entire inner tube in a radial direction thereof is compressed, and it becomes easier to insert the magnet into the protection tube. Then, the shape of the inner tube included in the protection tube is recovered by placing the motor rotor under the predetermined shape recovery condition.

During this shape recovery, the inner tube cannot fully regain the original shape, and compressive stress (prestress) is produced between the outer tube and the magnet. With the compressive stress produced between the outer tube and the magnet, it becomes possible to uniformly apply the compressive force to the outer peripheral surface of the magnet in advance. Based on what is described above, when the magnet is inserted in the protection tube in the assembling process, the magnet is not stressed by large local pressure, whereby the magnet is prevented from being damaged. Further, because the compressive force is uniformly applied to the outer peripheral surface of the magnet in advance, the magnet is prevented from being, damaged due to strong centrifugal force during rotation of the motor at high speed.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG 1 is an overall perspective view showing the construction of a rotor for a high-speed motor according to a first embodiment of the invention;
FIG 2 is a longitudinal sectional view showing the construction of the rotor for a high-speed motor according to the first embodiment of the invention;
FIGS. 3A and 3B are schematic longitudinal sectional view showing a first step in the assembling process of the rotor for a high-speed motor according to the first embodiment of the invention;
FIG. 4 is a schematic longitudinal sectional view showing a second step in the assembling process of the rotor for a high-speed motor according to the first embodiment of the invention;
FIG. 5 is a schematic longitudinal sectional view showing a third step in the assembling process of the rotor for a high-speed motor according to the first embodiment of the invention;
FIG. 6 is a schematic longitudinal sectional view showing the condition of prestress which is uniformly applied to an outer peripheral surface of a magnet after assembly of the rotor for a high-speed motor according to the first embodiment of the invention;
FIG. 7 is a diagram showing a distribution of compressive stress applied by a protection tube of the rotor for a high-speed motor before making improvement;
FIG 8 is a partial longitudinal sectional view showing the construction of an inner tube of a rotor for a high-speed motor according to a second embodiment of the invention; and
FIG. 9 is a diagram showing a distribution of compressive stress applied by the protection tube of the rotor for a high-speed motor after making improvement.

### DETAILED DESCRIPTION OF THE EXAMPLE EMBODIMENTS

A rotor for a high-speed motor according to example embodiments of the invention will be described with reference to the drawings. In the example embodiments, the same or equivalent components are denoted by the same reference numerals, and the description thereof will not be repeated where appropriate.

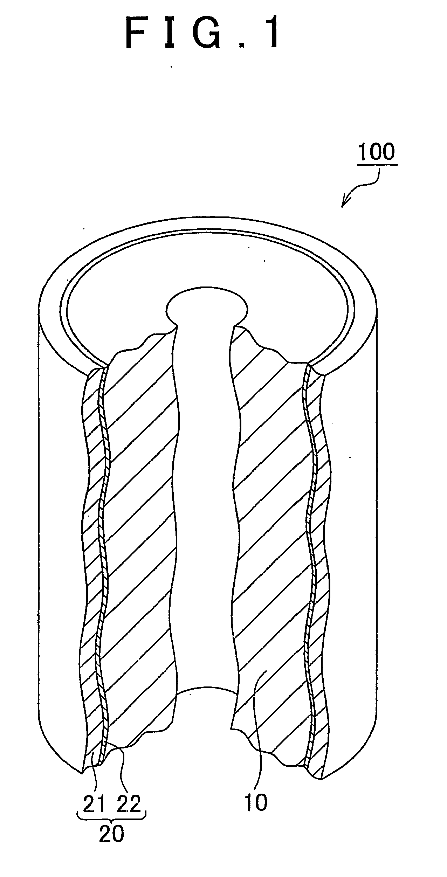

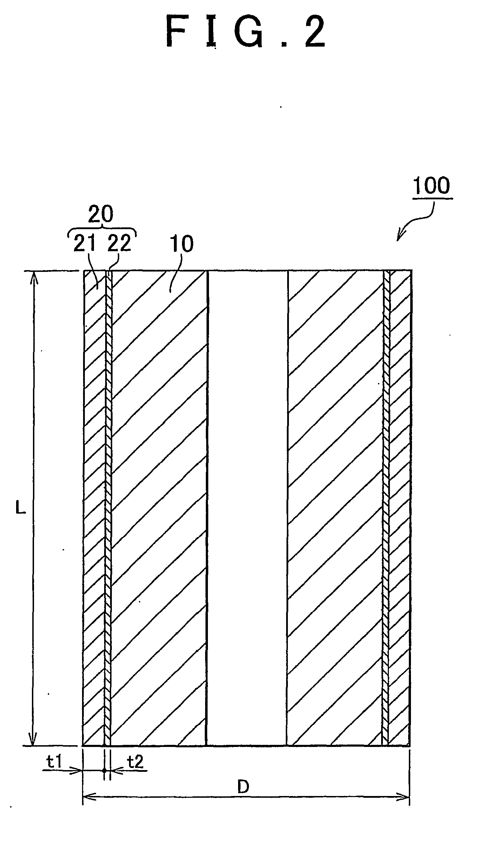

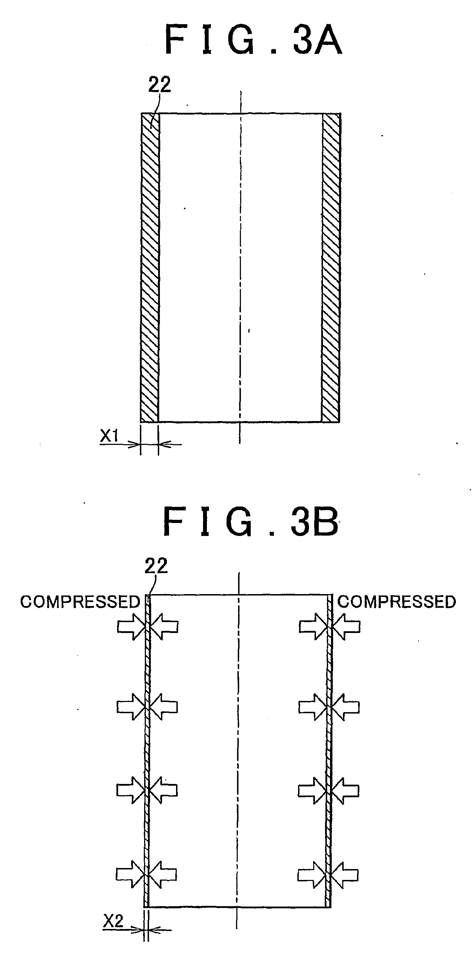

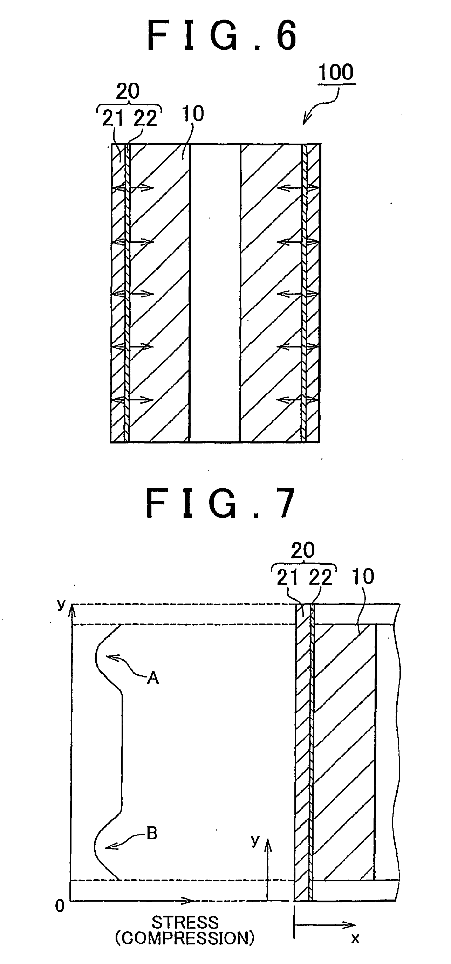

With reference to FIGS. 1 to 6, a specific configuration of a rotor 100 for a high-speed motor (hereinafter simply referred to as "rotor 100") according to a first embodiment of the invention will be described. FIG. 1 is an overall perspective view showing the construction of the rotor 100 according to the first embodiment. Note that, in order to facilitate understanding of the inner construction of the rotor 100, FIG. 1 shows a partially cutaway view. FIG. 2 is a longitudinal sectional view showing the construction of the rotor 100 according to the first embodiment. FIGS. 3 to 5 are schematic longitudinal sectional views showing first to third steps in the assembling process of the rotor 100 for a high-speed motor according to the first embodiment. FIG. 6 is a schematic longitudinal sectional view showing the condition of prestress which is uniformly applied to an outer peripheral surface of a magnet after assembly of the motor 100.

First, with reference to FIGS. 1 and 2, the construction of the rotor 100 according to the first embodiment will be described. The rotor 100 according to the first embodiment includes a permanent magnet 10 and a protection tube 20. The permanent magnet 10 is substantially cylindrical, and the protection tube 20 surrounds the permanent magnet 10 on an outer peripheral surface of the permanent magnet 10. In the drawings, the permanent magnet 10 is cylindrical and has a circular cross-section. However, a plurality of permanent magnets, each of which has a sector-shaped cross-section, may be arranged around a central axis of the rotor 100 so as to form a cylinder altogether.

As an example, a rare-earth magnet having high magnetic flux density is employed as the permanent magnet 10 so as to convert between electric energy and rotational motion at high efficiency in the motor, allowing the motor to be smaller in size and to produce higher output.

The protection tube 20 includes an outer tube 21 and an inner tube 22. The outer tube 21 is cylindrical, and disposed outside the permanent magnet 10. The inner tube 22 is also cylindrical, and disposed between the outer tube 21 and the permanent magnet 10. Since the outer tube 21 is required to be non-magnetic, highly rigid, and light in weight, titanium or carbon fiber reinforced plastics (CFRP), for example, is employed as the material to form the outer tube 21.

A shape memory material is employed as the material to form the inner tube 22 so as to previously produce compressive force between the outer tube 21 and the permanent magnet 10 by recovering the shape (thickness) in a radial direction of the inner tube 22 when a predetermined shape recovery condition is established. As examples of the predetermined shape recovery condition, a predetermined temperature condition and a predetermined magnetic field effect may be used. Further, an example of the shape memory material is nickel titanium alloy.

The external dimensions of the rotor 100 differ depending on the required performance of the rotor 100. An example (see FIG. 2) of the external dimensions of the rotor 100 is that length (L) is around 50 mm, outer diameter (D) is around 20 mm, thickness t1 of the outer tube 21 is around 2 mm, and thickness t2 of the inner tube 22 is around 1 mm or less. Further, the outer tube 21, the inner tube 22, and the permanent magnet 10 are provided to be substantially the same length. Note that, the outer tube 21 and the inner tube 22 may be provided to be the same length, and the length of the permanent magnet 10 may be made shorter than that of the outer tube 21 and the inner tube 22.

Next, the assembling process of the rotor 100 thus constructed will be described with reference to FIGS. 3 to 5. In the drawings, thickness of the inner tube 22 in a radial direction is shown exaggerated in order to facilitate understanding of the condition where the shape of the inner tube 22 is recovered. First, FIG. 3A shows the configuration of the inner tube 22 in which the shape of the inner tube 22 is recovered. In this case, thickness X1 of the inner tube 22 in a radial direction is larger by several dozen µm than the thickness t2 of the inner tube 22 (around 1 mm) when the rotor 100 is assembled as described above.

Next, as shown in FIG. 3B, compressive force is applied to the inner tube 22 in a radial direction to plastically deform the inner tube 22, such that thickness of the inner tube 22 is made to be around 1 mm, that is, the thickness t2 of the inner tube 22.

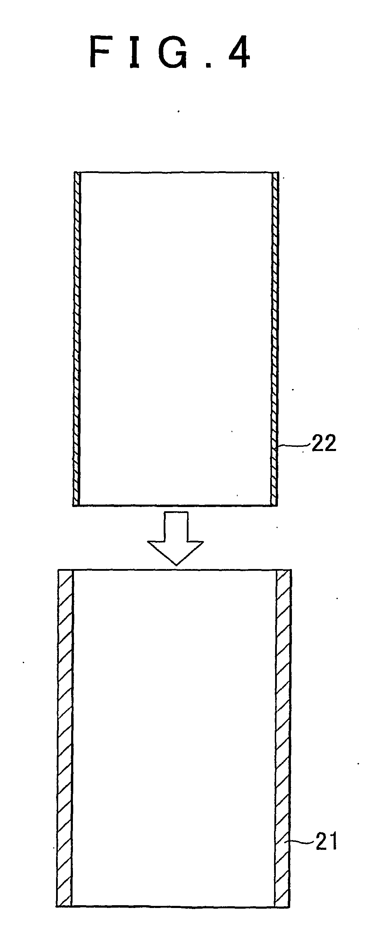

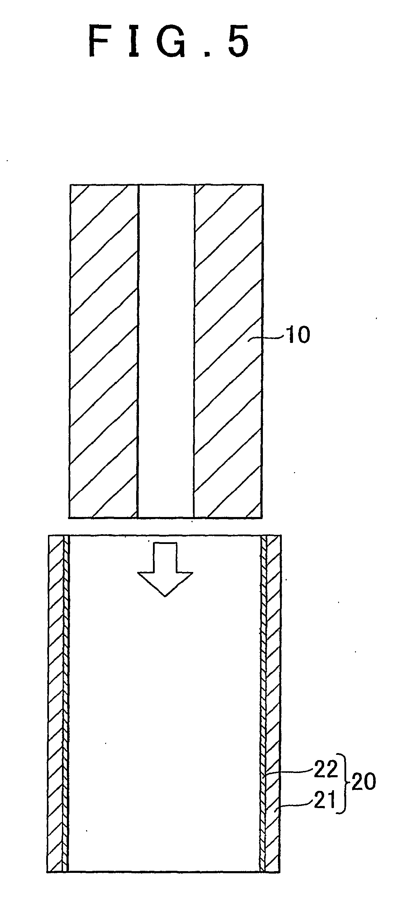

Next, as shown in FIG. 4, the plastically deformed inner tube 22 is inserted into the outer tube 21. During this, the dimensional difference between the outer diameter of the inner tube 22 and the inner diameter of the outer tube 21 is set such that the difference creates a minute clearance or the inner tube 22 is inserted into the outer tube 21 by weak press fit. Then the permanent magnet 10 is inserted into the inner tube 22 as shown in FIG. 5. During this, the dimensional difference between the outer diameter of the permanent magnet 10 and the inner diameter of the inner tube 22 is set such that the difference creates a minute clearance or the permanent magnet 10 is inserted into the inner tube 22 by weak press fit.

Next, as shown in FIG. 6, the shape of the inner tube 22 is recovered by placing the inner tube 22 under the predetermined shape recovery condition. The dimension of shape recovery in a radial direction is around several dozen µm. At this time, the inner tube 22 cannot fully regain the original shape, and this produces the compressive stress (prestress) between the outer tube 21 and the permanent magnet 10. In this way, with the compressive stress generated between the outer tube 21 and the permanent magnet 10, it becomes possible to uniformly apply the compressive force to the outer peripheral surface of the permanent magnet 10 in advance.

As mentioned above, according to the rotor 100 in the first embodiment, when the permanent magnet 10 is inserted in the protection tube 20 in the assembling process, the permanent magnet 10 is not stressed by large local pressure, whereby it is possible to prevent damaging the permanent magnet 10. Further, the outer tube 21 is highly rigid, and therefore the compressive force that acts inward (toward the permanent magnet 10) is produced as the shape of the inner tube 22 is recovered. As a result, the compressive stress, which is necessary for the permanent magnet 10 to retain centrifugal force resistance, is applied to the permanent magnet 10. In addition, if the aforementioned assembling process is employed, it becomes possible to form the outer tube 21 using ceramics or other materials that are conventionally not suitable for the use in the press fitting process.

The amount of heat generated in the permanent magnet 10 (by the hysteresis loss) as the motor operates tends to vary in a circumferential direction and a radial direction. However, in the first embodiment, the inner tube 22 is made of a shape memory material having higher thermal conductivity than that of the material used for the outer tube 21, and heat generated in the permanent magnet 10 is therefore effectively released (that is, the permanent magnet 10 is effectively cooled).

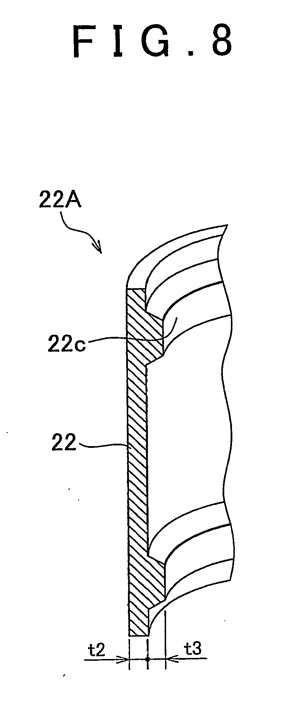

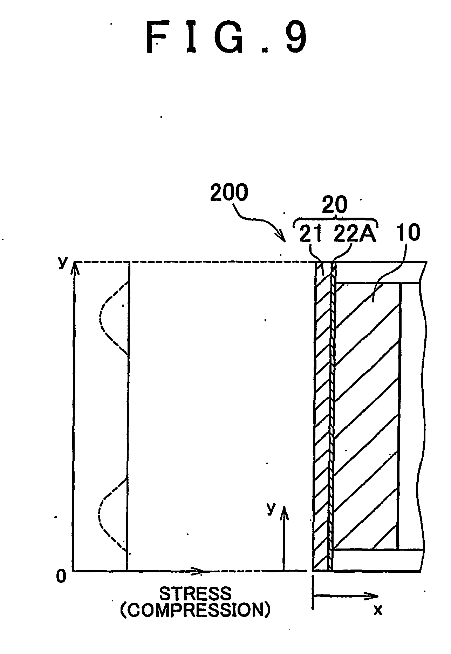

Next, with reference to FIGS. 7 to 9, a rotor 200 for a high-speed motor (hereinafter simply referred to as "rotor 200") according to a second embodiment will be described. In the first embodiment as described above, the outer tube 21, the inner tube 22, and the permanent magnet 10 are provided to be substantially the same length. However, in the second embodiment, the outer tube 21 and the inner tube 22 are provided to be the same length, and the length of the permanent magnet 10 is made shorter than the length of the outer tube 21 and the inner tube 22. FIG. 7 is a diagram showing a distribution of compressive stress applied by the protection tube 20 of the rotor 200 before making improvement. FIG 8 is a partial longitudinal sectional view showing the construction of the inner tube 22 of the rotor 200 according to the second embodiment. FIG. 9 is a diagram showing a distribution of compressive stress applied by the protection tube 20 of the rotor 200 after making improvement.

As shown in the compressive stress distribution in FIG. 7, the permanent magnet 10 is not long enough to reach an upper end and a lower end of the rotor 200 according to the second embodiment because the permanent magnet 10 is shorter than the outer tube 21 and the inner tube 22. Therefore, bending moment is generated at the upper end and the lower end of the rotor 200, and this may result in decreasing the compressive stress in the areas (shown by arrows labeled A and B in the drawing) in proximity to the upper end and the lower end of the rotor 200.

In view of the above, the protection tube 20 according to the second embodiment includes an inner tube 22A provided with compressive stress adjusting portions 22c. The compressive stress adjusting portions 22c are thicker than thickness of other portions of the inner tube 22A when the shape of the inner tube 22A is recovered in a radial direction thereof. The compressive stress adjusting portions 22c are disposed in the portions of the inner tube 22A facing the areas vertically around the upper end and the lower end of the permanent magnet 10. More specifically, the compressive stress adjusting portions 22c are circumferential protrusions that protrude inward the rotor 200 and disposed in the areas with decreased compressive stress. The compressive stress adjusting portions 22c have a thicker thickness (thickness t3) than the thickness t2 of the other portions of the inner tube 22A. Note that, other portions of the construction of the rotor 200 are the same as those of the construction of the rotor 100 according to the first embodiment.

As described above, if the inner tube 22A thus constructed is employed in the rotor 200, the compressive stress in the areas around the compressive stress adjusting portions 22c increases when the shape of the inner tube 22A is recovered after the inner tube 22A and the outer tube 21 are assembled. As a result, the distribution of the compressive stress applied by the protection tube 20 of the rotor 200 becomes uniform in the entire area of the rotor 200, as shown in FIG 9. In this way, the permanent magnet 10 is less likely to be damaged due to unevenness in the compressive stress distribution

While some embodiments of the invention have been illustrated above, it is to be understood that the invention is not limited to details of the illustrated embodiments, but may be embodied with various changes, modifications or improvements, which may occur to those skilled in the art, without departing from the scope of the invention as defined by the appended claims.

## Claims

1. A motor rotor (100; 200), comprising:
a magnet (10) that is cylindrical; and
a protection tube (20) that is provided to surround an outer peripheral surface of the magnet, the protection tube comprising
an outer tube (21) that is cylindrical and disposed outside;
an inner tube (22; 22A) that is cylindrical and disposed between the outer tube and the magnet, **characterised in that** the inner tube is made of a shape memory material in which a shape of the inner tube is recovered in a radial direction of the inner tube by recovering the (shape) thickness in a radial direction when a predetermined shape recovery condition is established.

2. The motor rotor according to claim 1, wherein the inner tube has higher thermal conductivity than the outer tube does.

3. The motor rotor (200) according to claim 1 or 2, wherein the inner tube (22A) includes a compressive stress adjusting portion (22c) whose thickness in the radial direction is thicker than thickness of other portions when the shape of the inner tube is recovered.

4. The motor rotor according to claim 3, wherein the compressive stress adjusting portion is provided in a portion of the inner tube facing an area at an end of the magnet.

5. The motor rotor according to claim 1 or 2, wherein a length of the magnet is the same as a length of the protection tube.

6. The motor rotor according to any one of claims I to 4, wherein a length of the magnet is shorter than a length of the profection tube.

7. The motor rotor according to any one of claims 1 to 6, wherein the magnet includes a plurality of magnet pieces that together form a substantially cylindrical shape.

8. A method of manufacturing a motor rotor (100; 200), comprising:
compressing an inner tube (22; 22A) in a radial direction, the inner tube being cylindrical and regaining a shape when a predetermined condition is established;
**characterised by**
inserting the inner tube compressed into an outer tube (21) that is cylindrical;
inserting a magnet (10) into the inner tube compressed; and
establishing the predetermined condition to cause the inner tube to regain the shape.

## Patentansprüche

1. Motor-Rotor (100; 200), aufweisend:
einen Magneten (10), der zylindrisch ist, und
ein Schutzrohr (20), das so angeordnet ist, dass es eine äußere Umfangsfläche des Magneten umgibt, wobei das Schutzrohr aufweist
ein äußeres Rohr (21), das zylindrisch ist und außen angeordnet ist;
ein inneres Rohr (22; 22A), das zylindrisch ist und zwischen dem äußeren Rohr und dem Magneten angeordnet ist, **dadurch gekennzeichnet, dass** das innere Rohr aus einem Formgedächtnismaterial gefertigt ist, in dem eine Form des inneren Rohrs in radialer Richtung des inneren Rohrs wiedererlangt wird, indem (die Form) die Dicke in einer radialer Richtung wiedererlangt wird, wenn eine vorbestimmte Formwiedererlangungsbedingung herbeigeführt worden ist.

2. Motor-Rotor nach Anspruch 1, wobei das innere Rohr eine höhere Wärmeleitfähigkeit aufweist als das äußere Rohr.

3. Motor-Rotor (200) nach Anspruch 1 oder 2, wobei das innere Rohr (22A) einen Druckbeanspruchungs-Einstellbereich (22c) beinhaltet, dessen Dicke in der radialen Richtung dicker ist als die Dicke der anderen Bereiche, wenn die Form des inneren Rohrs wiedererlangt worden ist.

4. Motor-Rotor nach Anspruch 3, wobei der Druckbeanspruchungs-Einstellbereich in einem Bereich des inneren Rohrs vorgesehen ist, der einem Bereich an einem Ende des Magneten gegenüberliegt.

5. Motor-Rotor nach Anspruch 1 oder 2, wobei eine Länge des Magneten mit einer Länge des Schutzrohrs identisch ist.

6. Motor-Rotor nach einem der Ansprüche 1 bis 4, wobei eine Länge des Magneten kürzer als eine Länge des Schutzrohrs ist.

7. Motor-Rotor nach einem der Ansprüche 1 bis 6, wobei der Magnet eine Vielzahl von Magnetstücken aufweist, die zusammen eine im Wesentlichen zylindrische Form aufweisen.

8. Verfahren zum Herstellen eines Motor-Rotors (100; 200), beinhaltend:
Komprimieren eines inneren Rohres (22; 22A) in einer radialen Richtung, wobei das innere Rohr zylindrisch ist und eine Form wiedererlangt, wenn eine vorbestimmte Bedingung herbeigeführt worden ist;
**gekennzeichnet durch**
Einfügen des inneren Rohrs, das komprimiert wird, in ein zylindrisches äußeres Rohr (21);
Einfügen eines Magneten (10) in das komprimierte innere Rohr; und
Herbeiführen der vorbestimmten Bedingung, um zu bewirken, dass das innere Rohr die Form wiedererlangt.

## Revendications

1. Rotor de moteur (100 ; 200), comportant :
un aimant (10) qui est cylindrique ; et
un tube de protection (20) qui est prévu pour entourer une surface périphérique extérieure de l'aimant, le tube de protection comportant :
un tube extérieur (21) qui est cylindrique et disposé à l'extérieur ;
un tube intérieur (22 ; 22A) qui est cylindrique et disposé entre le tube extérieur et l'aimant, **caractérisé en ce que** le tube intérieur est fabriqué dans une matière à mémoire de forme dans laquelle une forme du tube intérieur est récupérée dans une direction radiale du tube intérieur en récupérant la (forme) épaisseur dans une direction radiale quand une condition de récupération de forme est établie.

2. Rotor de moteur selon la revendication 1, dans lequel le tube intérieur a une conductivité thermique plus élevée que le tube extérieur.

3. Rotor de moteur (200) selon la revendication 1 ou 2, dans lequel le tube intérieur (22A) comprend partie de réglage de contrainte de compression (22c) dont l'épaisseur dans la direction radiale est plus grande que l'épaisseur d'autres parties quand la forme du tube intérieur est récupérée.

4. Rotor de moteur selon la revendication 3, dans lequel la partie de réglage de contrainte de compression est prévue dans une partie du tube intérieur faisant face à une zone au niveau d'une extrémité de l'aimant.

5. Rotor de moteur selon la revendication 1 ou 2, dans lequel une longueur de l'aimant est la même qu'une longueur du tube de protection.

6. Rotor de moteur selon l'une quelconque des revendications 1 à 4, dans lequel une longueur de l'aimant est plus courte qu'une longueur du tube de protection.

7. Rotor de moteur selon l'une quelconque des revendications 1 à 6, dans lequel l'aimant comprend une multiplicité de pièces d'aimant qui forment ensemble une forme essentiellement cylindrique.

8. Procédé de fabrication d'un rotor de moteur (100 ; 200), comportant le fait de :
comprimer un tube intérieur (22 ; 22A) dans une direction radiale, le tube intérieur étant cylindrique et retrouvant une forme quand une condition prédéterminée est établie ;
**caractérisé par** le fait d'insérer le tube intérieur comprimé dans un tube extérieur (21) qui est cylindrique ;
d'insérer un aimant (10) dans le tube intérieur comprimé ; et
d'établir la condition prédéterminée afin d'amener le tube intérieur à retrouver la forme.
